# EUROPÄISCHE PATENTSCHRIFT

(11) **EP 2 425 159 B1**
(45) Veröffentlichungstag und Bekanntmachung des Hinweises auf die Patenterteilung: **02.01.2013**
(21) Anmeldenummer: 10705982.6
(22) Anmeldetag: 25.02.2010
(51) Int. Cl.: F16K 3/26, F16K 3/32, G05D 7/06

(54) **PROPORTIONAL-DROSSELVENTIL**
PROPORTIONAL THROTTLE VALVE
SOUPAPE D'ÉTRANGLEMENT PROPORTIONELLE

(30) Priorität: 30.04.2009 DE 102009019554
(43) Veröffentlichungstag der Anmeldung: 07.03.2012
(73) Patentinhaber: Hydac Fluidtechnik GmbH, 66280 Sulzbach/Saar (DE)
(72) Erfinder: BILL, Markus, 66265 Heusweiler (DE); BRUCK, Peter, 66484 Althornbach (DE); VEIT, Markus, 66620 Nonnweiler-Primstal (DE)
(74) Vertreter: Bartels, Martin Erich Arthur
(86) Internationale Anmeldenummer: PCT/EP2010/001158
(87) Internationale Veröffentlichungsnummer: WO 2010/124757

(56) Entgegenhaltungen:
- EP-A1- 1 316 750
- EP-A2- 1 167 847
- US-A- 3 752 182

## Beschreibung

Die Erfindung betrifft ein Proportional-Drosselventil mit einem Ventilkolben, der eine Blendenfunktion ermöglicht und in einem Ventilgehäuse mit Fluideinlaß und Fluidauslaß in Längsrichtung verschiebbar geführt ist, wobei der Ventilkolben mit einer Steuerkante eine Fluidverbindung zwischen dem Fluideinlaß und dem Fluidauslaß ansteuert.

Ein Proportional-Drosselventil ist z.B in Dokument EP 1167847 offenbart.

Proportional-Drosselventile werden häufig eingesetzt, wenn die Höhe des diese Ventile passierenden Fluidstromes stufenlos in Abhängigkeit zu einem anliegenden Magnetstrom einer den Ventilkolben ansteuernden Spule verändert werden soll. Der Öffnungsquerschnitt des Ventilsitzes des Ventilkolbens ist dabei abhängig von der Position des Ventilkolbens. Wird die Spule mit einem elektrischen Gleichstrom beaufschlagt, bildet sich eine dem Magnetstrom proportionale Magnetkraft aus, wodurch der Ventilkolben in eine Öffnungsposition bewegt wird. Dabei wird in der Regel eine auf der Rückseite des Ventilkolbens angeordnete Feder gespannt, deren Federkraft der Magnetkraft entgegenwirkt. Stellt sich ein Gleichgewicht zwischen Magnetkraft und Federkraft ein, verharrt der Ventilkolben in seiner Position.

Das Proportional-Drosselventil ist weitgehend unabhängig von dem zu steuernden Druckniveau, weil der Ventilkolben druckausgeglichen ist, d.h. auf beiden Stirnflächen wirkt ein gleich hoher Druck ein. Proportional-Drosselventile werden beispielsweise bei Hub-Senkanwendungen etwa bei Flurförderfahrzeugen eingesetzt. Zum Absenken der Last bei solchen Einsatzzwecken wird ein 2/2-Wege-Ventil zur Darstellung der grundsätzlichen Hub-Senkbewegung eingesetzt. Gleichzeitig wird zur Steuerung des Volumenstromes das Proportional-Drosselventil eingesetzt.

Bei Proportional-Drosselventilen besteht jedoch die Problematik, dass der Volumenstrom abhängig vom Differenzdruck zwischen Fluideinlaß und Fluidauslaß ist, so dass etwa bei Flurförderfahrzeugen oder anderen Hubeinrichtungen die Senkgeschwindigkeit von der Last, die bewegt wird, abhängt. Es können dabei Grenzwerte, die beim Senkvorgang die Hubeinrichtung oder die zu transportierende Last beschädigen könnten, überschritten werden. Beim Stand der Technik wird daher ein fest eingestellter Maximal-Volumenstromregler in Reihe einem Proportional-Drosselventil vorgeschaltet. Der Maximal-Volumenstromregler ist passiv ausgelegt, greift also nur bei Überschreitung der maximalen Senkgeschwindigkeit ein. Ein nach dem Stand der Technik dahingehend aufzubauender Hydraulikkreis ist daher aufwendig und bedarf aufgrund der Vielzahl an Komponenten eines entsprechenden großdimensionierten Bauraumes.

Im Hinblick auf diesen Stand der Technik stellt sich die Erfindung die Aufgabe, ein Proportional-Drosselventil zu schaffen, das die genannten Funktionen integriert.

Diese Aufgabe wird durch ein Proportional-Drosselventil mit den Merkmalen des Patentanspruches 1 in seiner Gesamtheit gelöst.

Dadurch, dass gemäß dem kennzeichnenden Teil des Patentanspruches 1 eine Steuerkante des Ventilkolbens, die die Fluidverbindung zwischen dem Fluideinlaß und dem Fluidauslaß regelt, durch einen Regelkolben eines Stromreglers gebildet ist, ist die Funktion des Stromregelventils und des Proportional-Drosselventils in einer Ventileinheit zusammengefaßt.

Bevorzugte Ausführungsformen ergeben sich aus den Unteransprüchen.

Bei einer besonders bevorzugten Bauraum sparenden Ausführungsform ist der Regelkolben des Stromreglers in derselben Bohrung des Ventilgehäuses verschiebbar geführt wie der Ventilkolben selbst. Hierbei ist in besonders vorteilhafter Weise vorgesehen, den Regelkolben des Stromreglers kaskadenartig in einer Axialbohrung des Ventilkolbens zu führen und eine dazugehörige benötigte Regelfeder radial sowohl in einer Axialbohrung des Regelkolbens als auch in einer Axialbohrung des Ventilkolbens zu führen.

Eine vorgesehene Meßblende des Stromreglers ist dabei bevorzugt an dem axialen Ende des Regelkolbens, der dem Fluideinlaß benachbart ist, dichtend in einem Boden des Regelkolbens angeordnet und bildet eine fluidische Verbindung in den Federraum der Regelfeder. Der Regelkolben weist radiale Fluidauslässe auf, die im Ruhezustand des Proportional-Drosselventils in völliger Überdeckung mit der Axialbohrung für den Ventilkolben sind und erst bei einer Bestromung der Spule zur Verschiebung des Ventilkolbens in teilweise oder völlige Überdeckung mit den den Fluidauslaß bildenden radialen Bohrungen des Ventilgehäuses gelangen. Das Proportional-Drosselventil kann direkt gesteuert oder vorgesteuert ausgebildet sein.

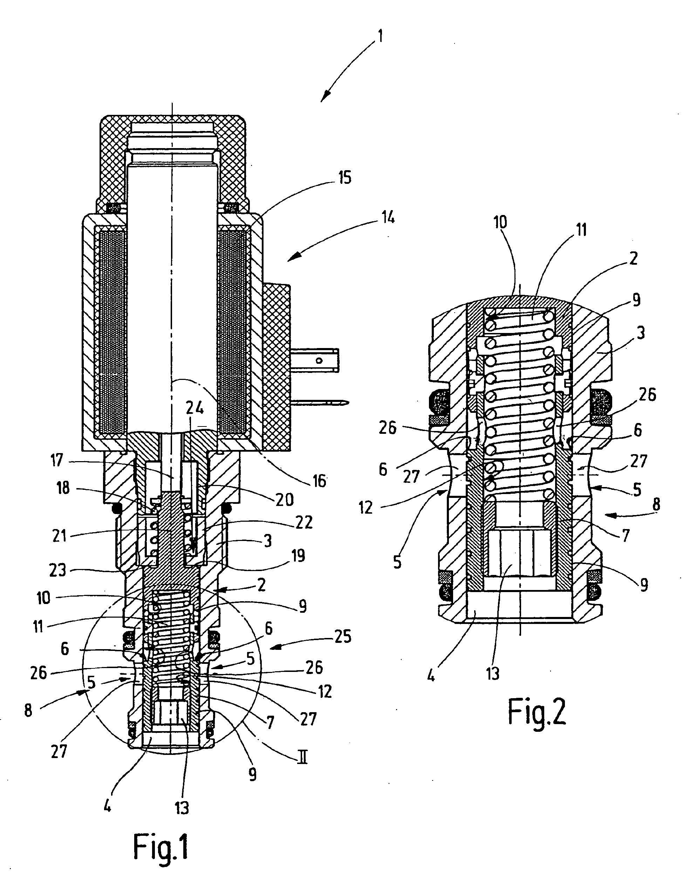

Im Folgenden ist die erfindungsgemäße Lösung anhand der Zeichnung näher erläutert. Dabei zeigen in prinzipieller und nicht maßstäblicher Darstellung die
- Fig.1: einen Längsschnitt durch ein erfindungsgemäßes Proportional-Drosselventils;
- Figl.2: ein mit II bezeichnetes Detail in Fig.1 .

In Fig.1 ist in einem Längsschnitt ein direkt gesteuertes Proportional-Drosselventil 1 dargestellt. In einem Magnetsystem-Gehäuse ist ein Magnetsystem 14 vorgesehen, wobei mittels einer Gleichstromspule 15 ein nicht näher dargestellter Magnetanker 16 ansteuerbar ist. Das Magnetsystem 14 ist bevorzugt als drückendes, weggesteuertes Proportional-Magnetsystem ausgebildet, wobei im bestromten Zustand der Gleichstromspule 15 der Magnetanker 16 und ein mit diesem wirkverbundenes Betätigungsglied 17 nach unten in Richtung eines Fluideinlasses 4 bewegbar ist.

Das Betätigungsglied 17 ist mit einem als "Blendenkolben" ausgebildeten Ventilkolben 2 wirkverbunden. Im unbestromten Zustand der Gleichstromspule 15 wird der Magnetanker 16, das Betätigungsglied 17 und der Ventilkolben 2 durch eine Feder 18 gegen einen Hubanschlag 19 gefahren. Dies entspricht dem Schließzustand des Proportional-Drosselventils 1, wobei der Fluiddurchlaß zwischen Fluideinlaß 4 und Fluidauslaß 5 gesperrt ist.

Das Magnetsystem-Gehäuse ist mit einer zylindrischen Führung 20 in ein Ventilgehäuse 3 ragend ausgebildet und entsprechend abgedichtet. Das zylindrische Betätigungsglied 17 ragt ebenso in die zylindrische Führung 20 und ist darin formschlüssig lösbar mit einem, die Feder 18 dornartig führenden Fortsatz 21 des Ventilkolbens 2 unter permanenter Anlage verbunden. Der Fortsatz 21 geht nach einem Durchtritt durch ein zylindrisches Distanzstück 22 mit einem, den Hubanschlag 19 definierenden Boden 23 in den als Blendenkolben gebildeten Ventilkolben 2 über. Der Hubanschlag 19 trennt die Rückseite 24 des Ventilkolbens 2 von seinem Hauptsteuerabschnitt 25.

Der Hauptsteuerabschnitt 25 ist in seiner etwa axialen Mitte in einen Regelkolben 7 eines Stromreglers 8 unterteilt. Der Regelkolben 7 ist in derselben Bohrung 9 wie der Ventilkolben 2 geführt und über das Betätigungsglied 17 als Teil des Hauptsteuerabschnittes 25 axial verschiebbar im Ventilgehäuse gelagert. Der Regelkolben 7 ist darüber hinaus axial verschiebbar in einer Axialbohrung 10 des genannten Ventilkolbens 2 geführt. Eine Regelfeder 11, die als Druckfeder gebildet ist, ist in der Axialbohrung 10 zu etwa ihrer halben Länge geführt.

Der Regelkolben 7 weist eine weitere Axialbohrung 12 auf, die als Führung für die Regelfeder 11 dient. An seinem, dem Fluideinlaß 4 zugewandten axialen Ende ist in den Regelkolben 7 eine Meßblende 13 eingesetzt, insbesondere eingeschraubt. Der Regelkolben 7 weist diametral gegenüberliegende, radiale Öffnungen 26 auf, die in dem in Fig.2 gezeigten Ruhezustand des Proportional-Drosselventils 1 in Verschlußlage unter völliger Überdeckung mit der Wand der Bohrung 9 sind. Wie die Fig.2 in einem Detail II nach der Fig.1 verdeutlicht, ist der Fluidauslaß 5 durch mindestens zwei diametral in der Wand der Bohrung 9 eingelassene Öffnungen 27 gebildet. Die Steuerkante 6 befindet sich am Außendurchmesser des Regelkolbens 7 und dient zur Regelung des gesamten Volumenstromes zwischen Fluideinlaß 4 und Fluidauslaß 5, wenn die Gleichstromspule 15 entsprechend bestromt ist.

Im Betrieb des Proportional-Drosselventils 1 hält die Regelfeder 11 durch ihre Vorspannung den Abstand zwischen der Meßblende 13 und dem oberen Teil des Ventilkolbens 2 auf einem Maximalabstand. Bis zum Erreichen eines maximal möglichen Volumenstromes besteht dieser Zustand fort und das Ventil arbeitet ausschließlich als Proportional-Drosselventil. Die Meßblende 13 verursacht bei ihrer Durchströmung einen Druckverlust in Abhängigkeit von dem Wert des Volumenstromes. Dieser Druckwert bewirkt wiederum eine Stellkraft in Richtung auf die Regelfeder 11, bis sich der Hauptsteuerabschnitt 25 durch die Verkürzung der Regelfeder 11 gleichfalls verkürzt. Die Steuerkante 6 wird in Richtung auf einen kleineren Durchströmungsquerschnitt am Fluidauslaß 5 verschoben; dabei sinkt der Druckverlust an der Meßblende 13 wiederum etwas ab, bis sich ein Gleichgewichtszustand für den Volumenstrom einstellt. Der Ventilkolben 2 übernimmt dann insoweit die Druckwaagenfunktion und die Proportional-Drosselfunktion.

Mit der erfindungsgemäßen Lösung läßt sich also die Stromregelfunktion eines externen Stromreglers direkt im Proportional-Drosselventil unterbringen, so dass dergestalt innerhalb des Hydraulikkreises auf ein komplettes zusätzliches Ventil verzichtet werden kann. Wie dargelegt wird dies dadurch erreicht, dass die für einen Konstant-Stromregler notwendige Meßblende und Regelfeder im Steuerkolben des Proportional-Drosselventils untergebracht sind. Dabei wird die für einen Stromregler ebenfalls notwendige Druckwaagenfunktion vom Regelkolben des Proportional-Drosselventils selbst übernommen. Die beschriebene Regelkante des Kolbens übernimmt mithin gleichzeitig die Proportional-Drosselfunktion als auch die Druckwaagenfunktion des Stromreglers.

## Patentansprüche

1. Proportional-Drosselventil mit einem Ventilkolben (2) und einem Regelkolben (7) eines Stromreglers (8), die eine Blendenfunktion ermöglichen und in einem Ventilgehäuse (3) mit Fluideinlaß (4) und Fluidauslaß (5) in Längsrichtung verschiebbar geführt sind, wobei eine Steuerkante (6) des Regelkolbens (7) zur Fluidverbindung des Fluideinlasses (4) mit dem Fluidauslaß (5) gebildet ist.

2. Proportional-Drosselventil nach Anspruch 1, **dadurch gekennzeichnet, dass** der Regelkolben (7) des Stromreglers (8) in derselben Bohrung (9) des Ventilgehäuses (3) verschiebbar geführt ist, ebenso wie der Ventilkolben (2).

3. Proportional-Drosselventil nach Anspruch 1 oder 2, **dadurch gekennzeichnet, dass** der Regelkolben (7) des Stromreglers (8) in einer Axialbohrung (10) des Ventilkolbens (2) geführt ist und eine Regelfeder (11) sich radial in der Axialbohrung (10) sowie in einer weiteren Axialbohrung (12) in dem Regelkolben (7) abstützt.

4. Proportional-Drosselventil nach einem der Ansprüche 1 bis 3, **dadurch gekennzeichnet, dass** eine Meßblende (13) des Stromreglers (8) in dem Regelkolben (7) angeordnet ist.

5. Proportional-Drosselventil nach Anspruch 4, **dadurch gekennzeichnet, dass** die Meßblende (13) in demjenigen Endbereich des Regelkolbens (7) angeordnet ist, der dem Fluideinlaß (4) zugewandt ist.

6. Proportional-Drosselventil nach einem der Ansprüche 1 bis 5, **dadurch gekennzeichnet, dass** der Fluideinlaß (4) in axialer Richtung in das Ventilgehäuse (3) einmündet und der Fluidauslaß (5) in radialer, senkrechter Richtung hierzu angeordnet das Ventilgehäuse (3) durchgreift.

7. Proportional-Drosselventil nach einem der vorhergehenden Ansprüche, **dadurch gekennzeichnet, dass** das Proportional-Drosselventil (1) direkt gesteuert ist.

## Claims

1. A proportional throttle valve comprising a valve piston (2) and a control piston (7) of a flow regulator (8) which enable an orifice function and which are moveably guided in a valve housing (3) with a fluid inlet (4) and a fluid outlet (5) in the longitudinal direction, a control edge (6) of the control piston (7) being formed for fluid connection of the fluid inlet (4) to the fluid outlet (5).

2. The proportional throttle valve according to Claim 1, **characterised in that** the control piston (7) of the flow regulator (8) is moveably guided in the same bore (9) of the valve housing (3) as the valve piston (2).

3. The proportional throttle valve according to Claim 1 or 2, **characterised in that** the control piston (7) of the flow regulator (8) is guided in an axial bore (10) of the valve piston (2) and a control spring (11) is supported in the axial bore (10) and also in a further axial bore (12) in the control piston (7).

4. The proportional throttle valve according to any of Claims 1 to 3, **characterised in that** there is a metering orifice (13) of the flow regulator (8) in the control piston (7).

5. The proportional throttle valve according to Claim 4, **characterised in that** the metering orifice (13) is located **in that** end region of the control piston (7) which is facing the fluid inlet (4).

6. The proportional throttle valve according to any of Claims 1 to 5, **characterised in that** the fluid inlet (4) in the axial direction discharges into the valve housing (3) and the fluid outlet (5) located in the radial perpendicular direction thereto extends through the valve housing (3).

7. The proportional throttle valve according to any of the preceding claims, **characterised in that** the proportional throttle valve (1) is directly controlled.

## Revendications

1. Soupape d'étranglement proportionnelle comprenant un piston (2) de soupape et un piston (7) de réglage d'un régulateur (8) de courant, qui rendent possible une fonction de diaphragme et qui sont guidés de manière à coulisser dans la direction longitudinale dans un corps (3) de soupape ayant une entrée (4) pour du fluide et une sortie (5) pour du fluide, dans laquelle un bord (6) de commande du piston (7) de réglage est formé pour la liaison fluidique de l'entrée (4) pour du fluide à la sortie (5) pour du fluide.

2. Soupape d'étranglement proportionnelle suivant la revendication 1, **caractérisée en ce que** le piston (7) de réglage du régulateur (8) de courant est guidé de manière à coulisser dans le même trou (5) du corps (3) de soupape que le piston (2) de soupape.

3. Soupape d'étranglement proportionnelle suivant la revendication 1 ou 2, **caractérisée en ce que** le piston (7) de réglage du régulateur (8) de courant est guidé dans un trou (10) axial du piston (2) de soupape et un ressort (11) de réglage s'appuie radialement dans le trou (10) axial ainsi que dans un autre trou (12) axial du piston (7) de réglage.

4. Soupape d'étranglement proportionnelle suivant l'une des revendications 1 à 3, **caractérisée en ce qu'**un diaphragme (13) de mesure du régulateur (8) du courant est monté dans le piston (7) de réglage.

5. Soupape d'étranglement proportionnelle suivant la revendication 4, **caractérisée en ce que** le diaphragme (13) de mesure est monté dans la zone d'extrémité du piston (7) de réglage, qui est tournée vers l'entrée (4) pour du fluide.

6. Soupape d'étranglement proportionnelle suivant l'une des revendications 1 à 5, **caractérisée en ce que** l'entrée (4) pour du fluide débouche en direction axiale dans le corps (3) de soupape et la sortie (5) pour du fluide traverse le corps (3) de soupape en étant disposée à cet effet dans une direction radiale perpendiculaire.

7. Soupape d'étranglement proportionnelle suivant l'une des revendications précédentes, **caractérisée en ce que** la soupape (1) d'étranglement proportionnelle est commandée directement.
